# EUROPÄISCHE PATENTANMELDUNG

(11) **EP 2 859 785 A1**
(43) Veröffentlichungstag der Anmeldung: **15.04.2015**
(21) Anmeldenummer: 13450045.3
(22) Anmeldetag: 09.10.2013
(51) Int. Cl.: A01C 7/08

(54) **Verfahren und Vorrichtung zum Ausbringen eines körnigen oder riesel- bzw. streufähigen Materials**

(71) Anmelder: Schöls, Jürgen, 3753 Hötzelsdorf (AT)
(72) Erfinder: Schöls, Jürgen, 3753 Hötzelsdorf (AT)
(74) Vertreter: Miksovsky, Alexander

(57) **Zusammenfassung**

Bei einem Verfahren und einer Vorrichtung zum Ausbringen eines körnigen oder riesel- bzw. streufähigen Materials (11), beispielsweise Saatgut, Düngemittel oder dgl., wobei das auszubringende Material (11) aus einem Vorratsbehälter zu wenigstens einer Verteileinrichtung (7) geliefert wird und von dieser über eine Mehrzahl von Ausbringeinrichtungen (14) unter Beaufschlagung des auszubringenden Materials (11) mit Druckluft ausgebracht wird, ist vorgesehen, dass das auszubringende Material (11) von der Verteileinrichtung (7) in eine Mehrzahl von im Wesentlichen vertikal angeordneten Zwischenelementen (10) eingebracht wird, in welche an dem jeweils von der Verteileinrichtung (7) abgewandten Ende (16) Druckluft für ein Ausbringen des Materials (11) über an die Zwischenelemente (10) anschließende Ausbringeinrichtungen (14) eingebracht wird. Derart wird ein zuverlässiges Ausbringen des auszubringenden Materials (11) bei einer einfachen technischen Konstruktion sowie unter Vorsehen einer Vielzahl von Ausbringeinrichtungen (14) zur Verfügung gestellt.

## Beschreibung

Die vorliegende Erfindung bezieht sich auf ein Verfahren zum Ausbringen eines körnigen oder riesel- bzw. streufähigen Materials, beispielsweise Saatgut, Düngemittel oder dgl., wobei das auszubringende Material aus einem Vorratsbehälter zu wenigstens einer Verteileinrichtung geliefert wird und von dieser über eine Mehrzahl von Ausbringeinrichtungen unter Beaufschlagung des auszubringenden Materials mit Druckluft ausgebracht wird. Die vorliegende Erfindung bezieht sich darüber hinaus auf eine Vorrichtung zum Ausbringen eines körnigen oder riesel- bzw. streufähigen Materials, beispielsweise Saatgut, Düngemittel oder dgl., mit einem Vorratsbehälter für das auszubringende Material, wenigstens einer Verteileinrichtung, einer Mehrzahl von Ausbringeinrichtungen sowie einer Druckluftquelle zur Beaufschlagung des auszubringenden Materials mit Druckluft.

Derartige Vorrichtungen und Verfahren zum Ausbringen eines körnigen oder riesel- bzw. streufähigen Materials, wie beispielsweise Saatgut, Düngemittel oder dgl., sind in unterschiedlichen Ausführungsformen bekannt, wobei beispielsweise im Bereich einer Zufuhr- oder Verteileinrichtung eine Beaufschlagung mit Druckluft erfolgt, um das auszubringende Material entsprechend sicher von der Zufuhrvorrichtung bzw. Verteileinrichtung in jeweilige Ausbringeinrichtungen einzubringen, wobei beispielsweise auf die DE 202 06 262 U1 verwiesen werden kann. Nachteilig bei einer derartigen Einbringung der Druckluft im Bereich einer Zufuhreinrichtung bzw. Verteileinrichtung ist insbesondere, dass im Bereich einer derartigen Zufuhreinrichtung bzw. Verteileinrichtung eine überaus aufwändige Abdichtung zur Verfügung gestellt werden muss, um ein Austreten der Druckluft in einen Vorratsbehälter zu verhindern. Weiters ist bei derartigen bekannten Ausführungsformen nachteilig bzw. problematisch, dass beispielsweise bei einem Verstopfen der Ausbringeinrichtung und einem Ansammeln des auszubringenden Materials, selbst bei Vorsehen einer Abdichtung im Bereich der Mündung der Druckluftquelle, ein unkontrolliertes Austreten des auszubringenden Materials und insbesondere ein Rückschlagen in einen Vorratsbehälter nicht zuverlässig verhindert werden kann. Darüber hinaus ist bei Vorsehen einer Vielzahl von Ausbringeinrichtungen eine entsprechende Vielzahl von Führungsreinrichtungen für die Bereitstellung der Druckluft zu jeder einzelnen Ausbringeinrichtung vorzusehen, so dass einerseits ein entsprechend hoher konstruktiver Aufwand für die Zufuhr der Druckluft notwendig ist und insbesondere aus Platzgründen eine lediglich geringe Anzahl von Ausbringeinrichtungen bereits vorgesehen werden kann.

Derartige Verfahren und Vorrichtungen, beispielsweise zum Ausbringen von Saatgut oder Düngemittel, sollen jedoch zunehmend größere Flächen bzw. Bereiche überstreichen, so dass eine entsprechend große Anzahl von Ausbringeinrichtungen wünschenswert bzw. erforderlich ist, welche jedoch bei den bekannten Verfahren und Vorrichtungen nicht mit einem sinnvollen technischen Konstruktionsaufwand zur Verfügung gestellt werden können.

Die vorliegende Erfindung zielt daher darauf ab, ein Verfahren und eine Vorrichtung der eingangs genannten Art dahingehend weiterzubilden, dass die Nachteile bzw. Probleme des bekannten Standes der Technik vermieden oder zumindest weitgehend reduziert werden. Die Erfindung zielt insbesondere auf die Bereitstellung eines Verfahrens und einer Vorrichtung zum Ausbringen eines körnigen oder riesel- bzw. streufähigen Materials, beispielsweise Saatgut, Düngemittel oder dgl. ab, bei welchen mit vereinfachtem konstruktivem Aufwand durch ein Zuführen von Druckluft eine große Anzahl von Ausbringeinrichtungen sicher und zuverlässig mit dem auszubringenden Material versorgt werden kann.

Zur Lösung dieser Aufgaben ist ein Verfahren der eingangs genannten Art im Wesentlichen **dadurch gekennzeichnet, dass** das auszubringende Material von der Verteileinrichtung in eine Mehrzahl von im Wesentlichen vertikal angeordneten Zwischenelementen eingebracht wird, in welche an dem jeweils von der Verteileinrichtung abgewandten Ende Druckluft für ein Ausbringen des Materials über an die Zwischenelemente anschließende Ausbringeinrichtungen eingebracht wird. Dadurch, dass erfindungsgemäß das auszubringende Material in eine Mehrzahl von im Wesentlichen vertikal angeordneten Zwischenelementen eingebracht wird, kann ohne eine Beeinflussung durch Druckluft im Bereich der Verteileinrichtung, wie dies bei bekannten Verfahren vorgesehen war, eine ordnungsgemäße Aufteilung und Einbringung des auszubringenden Materials vorgenommen werden. In den im Wesentlichen vertikal angeordneten Zwischenelementen fällt das auszubringende Material unter den Einfluss der Schwerkraft und beschleunigt derart in Richtung zu den an die Zwischenelemente angeschlossenen bzw. anschließenden Ausbringeinrichtungen, wobei für eine entsprechende Beaufschlagung für eine Unterstützung des Ausbringens bzw. Austritts des auszubringenden Materials erfindungsgemäß die Druckluft in jedes Zwischenelement an dem von der Verteileinrichtung abgewandten Ende eingebracht wird. Es ist somit erfindungsgemäß sichergestellt, dass der Einsatz von Druckluft die ordnungsgemäße Betriebsweise der Verteileinrichtung nicht beeinflusst, so dass auch die Anforderungen im Hinblick auf eine Abdichtung im Bereich der Verteileinrichtung, um ein Eindringen von Druckluft beispielsweise in einen der Verteileinrichtung vorgeschalteten Vorratsbehälter zu verhindern, gegenüber dem bekannten Stand der Technik stark verringert sind. Darüber hinaus ist der konstruktive Aufwand für die Zufuhr von Druckluft für ein Ausbringen des auszubringenden Materials über die Vielzahl von Ausbringeinrichtungen gegenüber dem bekannten Stand der Technik ebenfalls stark verringert.

Zur weiteren Vereinfachung insbesondere der Zufuhr der Druckluft wird gemäß einer bevorzugten Ausführungsform des erfindungsgemäßen Verfahrens vorgeschlagen, dass die Druckluft über einen Druckluftkanal gleichzeitig zu einer Mehrzahl von Zwischenelementen zugeführt wird. Ein derartiger Druckluftkanal kann in einfacher Weise mit Druckluft beispielsweise über ein Gebläse versorgt werden, wobei die Druckluft aus einem derartigen gemeinsamen Druckluftkanal zu einer Mehrzahl von Zwischenelementen zugeführt und über die jeweils wenigstens eine Öffnung in jedem Zwischenelement in dieses sowie in die anschließende Ausbringeinrichtung ausgebracht wird, wodurch insbesondere der konstruktive Aufwand für die Bereitstellung von Druckluft verringert werden kann.

Wie oben bereits erwähnt, erfolgt im Bereich der im Wesentlichen vertikal angeordneten Zwischenelemente eine Beschleunigung des auszubringenden Materials unter Einfluss der Schwerkraft, wobei eine Unterstützung der Bewegungsrichtung des auszubringenden Materials in Richtung zu den Ausbringeinrichtungen sowie durch diese hindurch dadurch erzielt wird, dass die Druckluft in die Zwischenelemente in Richtung zu den an die Zwischenelemente anschließenden Ausbringeinrichtungen eingebracht wird, wie dies einer weiters bevorzugten Ausführungsform des erfindungsgemäßen Verfahrens entspricht.

Für eine besonders zuverlässige Dosierung bzw. Einstellung der Menge des auszubringenden Materials wird gemäß einer weiters bevorzugten Ausführungsform vorgeschlagen, dass das auszubringende Material über eine insbesondere walzenförmige und mit Vertiefungen zur Aufnahme einer vorbestimmten Menge des auszubringenden Materials sowie zu einer Rotationsbewegung antreibbaren Verteileinrichtung zu den Zwischenelementen eingebracht wird.

Durch die erfindungsgemäß vorgeschlagene vereinfachte Konstruktion insbesondere im Bereich der Zuführung von Druckluft sowie im Hinblick auf die gewünschte Erhöhung der Anzahl von Ausbringeinrichtungen wird darüber hinaus vorgeschlagen, dass die Druckluft aus einer Druckluftquelle zu einer Mehrzahl von jeweils mit einer Mehrzahl von Zwischenelementen zusammenwirkenden Druckluftkanälen zugeführt wird, wie dies einer weiters bevorzugten Ausführungsform des erfindungsgemäßen Verfahrens entspricht.

Zur Lösung der oben angegebenen Aufgaben ist darüber hinaus eine Vorrichtung zum Ausbringen eines körnigen oder riesel- bzw. streufähigen Materials der eingangs genannten Art im Wesentlichen **dadurch gekennzeichnet, dass** an die wenigstens eine Verteileinrichtung für ein Ausbringen des auszubringenden Materials eine Mehrzahl von im Wesentlichen vertikal angeordneten Zwischenelementen anschließt, welche jeweils an ihrem von der Verteileinrichtung abgewandten Ende mit wenigstens einer Öffnung zur Einbringung von Druckluft versehen sind, und dass an dem von der Verteileinrichtung abgewandten Ende jedes Zwischenelements jeweils eine insbesondere schlauchförmige und an sich bekannte Ausbringeinrichtung anschließt. Wie bereits oben erwähnt, erfolgt eine Beschleunigung des auszubringenden Materials in den im Wesentlichen vertikal angeordneten Zwischenelementen, wobei darüber hinaus an dem von der Verteileinrichtung abgewandten Ende der Zwischenelemente die Druckluft über wenigstens eine Öffnung in das Zwischenelement eingebracht wird und derart einen Durchtritt des auszubringenden Materials durch die jeweils an dieses Ende des Zwischenelements anschließende Ausbringeinrichtung unterstützt.

Zur gleichzeitigen Versorgung einer Mehrzahl von Zwischenelementen zum Ausbringen des auszubringenden Materials ist gemäß einer bevorzugten Ausführungsform vorgesehen, dass eine Mehrzahl von Zwischenelementen in einem gemeinsamen Druckluftkanal angeordnet ist, über welchen Druckluft von der Druckluftquelle zu den Zwischenelementen zuführbar ist.

Für eine gleichmäßige Einbringung bzw. Verteilung der Druckluft im Zwischenelement sowie der daran anschließenden Ausbringeinrichtung als auch zur Sicherstellung, dass eine ausreichende Druckluftmenge sowohl in das Zwischenelement als auch die Ausbringeinrichtung eingebracht wird, welche gegebenenfalls eine vergleichsweise große Länge aufweist, ist darüber hinaus vorgesehen, dass die Zwischenelemente an ihrem von der Verteileinrichtung abgewandten Ende über den Umfang verteilt mit einer Mehrzahl von Öffnungen für die Einbringung von Druckluft ausgebildet sind, wie dies einer weiters bevorzugten Ausführungsform der erfindungsgemäßen Vorrichtung entspricht.

Zur Unterstützung der Austragsbewegung des auszubringenden Materials ist darüber hinaus bevorzugt vorgesehen, dass die wenigstens eine Öffnung für Druckluft in Richtung zu der an das Zwischenelement anschließenden Ausbringeinrichtung orientiert ist.

Für eine zuverlässige Dosierung des auszubringenden Materials in die Mehrzahl von im Wesentlichen vertikal angeordneten Zwischenelementen wird darüber hinaus vorgeschlagen, dass die Verteileinrichtung von einer insbesondere walzenförmigen und mit Vertiefungen zur Aufnahme einer vorbestimmten Menge des auszubringenden Materials sowie antreibbare Verteileinrichtung gebildet ist, welche mit einer Mehrzahl von in einer Reihe angeordneten Zwischenelementen zusammenwirkt, wie dies einer weiters bevorzugten Ausführungsform der erfindungsgemäßen Vorrichtung entspricht.

Zur weiteren Erhöhung der Anzahl der anschließbaren bzw. einsetzbaren Ausbringeinrichtungen, wodurch, wie oben erwähnt, größere Flächen in einem Arbeitsgang versorgt bzw. überstrichen werden können oder vergleichsweise nahe benachbart zueinander angeordnete Ausbringeinrichtungen eingesetzt werden können, wird darüber hinaus vorgeschlagen, dass eine Mehrzahl von Verteileinrichtungen jeweils mit einer Mehrzahl von Zwischenelementen zusammenwirkt, wie dies einer weiters bevorzugten Ausführungsform der erfindungsgemäßen Vorrichtung entspricht.

Für eine platzsparende Anordnung einer derartigen Mehrzahl von Verteileinrichtungen sowie der damit zusammenwirkenden Zwischenelemente und Ausbringeinrichtungen wird darüber hinaus bevorzugt vorgesehen, dass die Verteileinrichtungen im Wesentlichen parallel zueinander angeordnet sind.

Für eine gegebenenfalls gesteuerte Versorgung jeweils einer Mehrzahl von einer Verteileinrichtung zugeordneten Zwischenelementen sowie Ausbringeinrichtungen mit Druckluft kann darüber hinaus vorgesehen sein, dass entsprechend der Mehrzahl von Verteileinrichtungen und diesen zugeordneten Zwischenelementen eine Mehrzahl von Druckluftkanälen vorgesehen ist, wie dies einer weiters bevorzugten Ausführungsform der erfindungsgemäßen Vorrichtung entspricht.

Für eine zumindest vorsorgliche Abdichtung insbesondere des Vorratsbehälters gegenüber der in die Zwischenelemente und Ausbringeinrichtungen einzubringenden Druckluft ist darüber hinaus erfindungsgemäß bevorzugt vorgesehen, dass im Bereich der Verteileinrichtung wenigstens eine Abdichteinrichtung vorgesehen ist. Eine derartige Abdichteinrichtung muss jedoch nicht die vergleichsweise hohen Anforderungen von Abdichteinrichtungen gemäß dem bekannten Stand der Technik erfüllen, bei welchen eine Zufuhr der Druckluft im Wesentlichen unmittelbar im Bereich der Verteileinrichtung vorgesehen ist.

Für eine Anpassung an gegebenenfalls unterschiedliche Arten oder Mengen des auszubringenden Materials ist darüber hinaus bevorzugt vorgesehen, dass die wenigstens eine Verteileinrichtung entfernbar und austauschbar in der Vorrichtung festlegbar ist. Dadurch wird es möglich, insbesondere in Anpassung an unterschiedliches, auszubringendes Material durch einen einfachen Tausch einer derartigen Verteileinrichtung eine entsprechende Anpassung vorzunehmen.

Ebenso kann für eine Anpassung an gegebenenfalls unterschiedliche Bearbeitungsbreiten und/oder ebenfalls unterschiedliches auszubringendes Material für einen einfachen Tausch der Zwischenelemente sowie der daran anschließenden Ausbringeinrichtungen gemäß einer weiters bevorzugten Ausführungsform vorgesehen sein, dass die Mehrzahl von mit einer Verteileinrichtung zusammenwirkenden Zwischenelementen in einem gemeinsamen Träger- bzw. Abstützelement aufgenommen ist, welches insbesondere entfernbar und austauschbar in der Vorrichtung festlegbar ist.

Die Erfindung wird nachfolgend anhand von in der beiliegenden Zeichnung schematisch dargestellten Ausführungsbeispielen näher erläutert. In dieser zeigen:
Fig. 1 eine schematische Ansicht einer erfindungsgemäßen Vorrichtung zur Durchführung des erfindungsgemäßen Verfahrens;
Fig. 2 eine schematische Seiten- bzw. Schnittansicht der erfindungsgemäßen Vorrichtung, wobei der Vorratsbehälter nicht dargestellt ist;
Fig. 3 in einer zur Fig. 2 ähnlichen Darstellung eine Detailansicht der erfindungsgemäßen Vorrichtung zur Durchführung des erfindungsgemäßen Verfahrens, wobei insbesondere die Verteileinrichtung und die daran anschließenden, im Wesentlichen vertikal angeordneten Zwischenelemente gezeigt sind;
Fig. 4 eine schematische perspektivische Ansicht eines Träger- bzw. Abstützelements, in welchem eine Mehrzahl von Zwischenelementen einer erfindungsgemäßen Vorrichtung aufgenommen ist; und
Fig. 5 in vergrößertem Maßstab eine Darstellung jeweils eines Zwischenelements einer erfindungsgemäßen Vorrichtung, wobei Fig. 5a eine Seitenansicht darstellt und Fig. 5b eine Schnittansicht durch ein derartiges Zwischenelement ist.

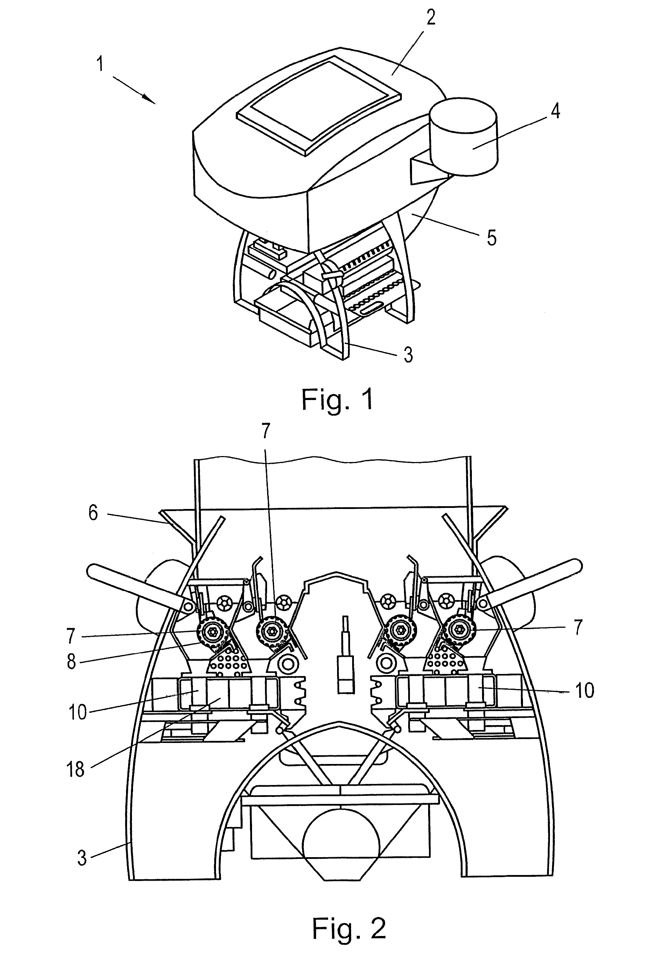

In Fig. 1 ist schematisch mit 1 eine Vorrichtung zum Ausbringen eines körnigen oder riesel- bzw. streufähigen Materials, wie beispielsweise Saatgut, Düngemittel oder dgl. gezeigt, wobei die Vorrichtung 1 beispielsweise an einem nicht näher dargestellten landwirtschaftlichen Zugfahrzeug festgelegt wird.

Die Vorrichtung 1 weist einen Vorratsbehälter 2 für das auszubringende Material auf, wobei der Vorratsbehälter 2 ebenso wie die weiteren Elemente der Vorrichtung 1 an einem schematisch mit 3 angedeuteten Gestell gelagert ist, welches an dem nicht näher dargestellten Zugfahrzeug bzw. Transportfahrzeug festlegbar ist. In Fig. 1 sind darüber hinaus ein Filter 4 sowie ein Zufuhrkanal 5 für Druckluft dargestellt, über welchen von einer nicht näher dargestellten und insbesondere unterhalb des Vorratsbehälters 2 angeordneten Gebläseeinrichtung Druckluft zu Ausbringeinrichtungen für das auszubringende Material zugeführt wird, wie dies aus den nachfolgenden Darstellungen deutlicher ersichtlich werden wird.

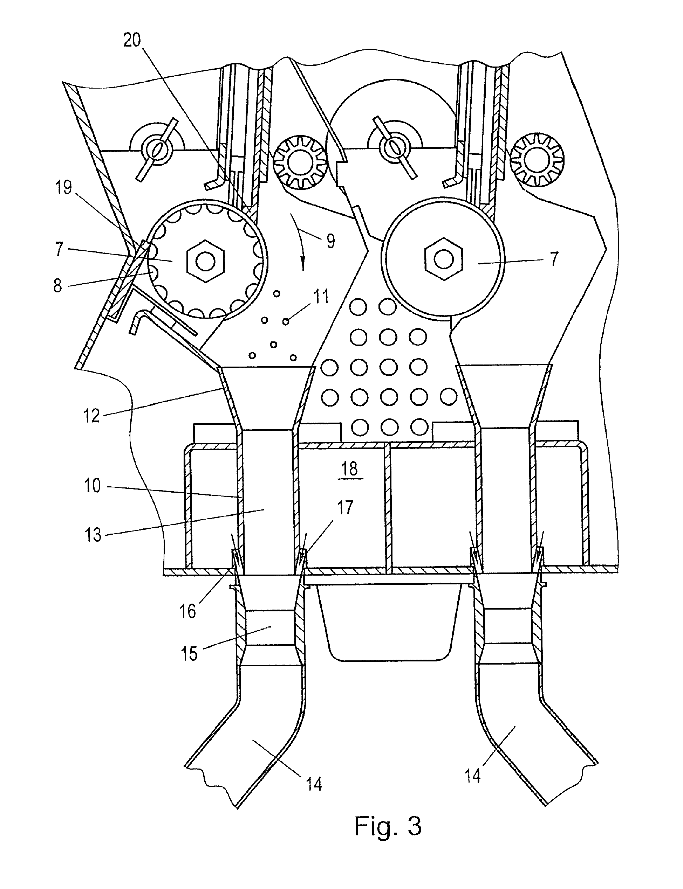

Bei der Darstellung gemäß Fig. 2 ist wiederum der Rahmen bzw. das Gestell mit 3 bezeichnet, wobei der nicht dargestellte Vorratsbehälter im Bereich eines Trichters 6 festgelegt ist. Aus diesem Vorratsbehälter gelangt auszubringendes Material zu Verteileinrichtungen 7, welche im Detail in Fig. 3 dargestellt sind. Die Verteileinrichtungen 7 sind im Wesentlichen walzenförmig ausgebildet und weisen über ihren Umfang eine Vielzahl von Vertiefungen 8 auf, in welche das auszubringende Material eintritt, wobei die Vertiefungen 8 insbesondere auf die Größe des auszubringenden Materials sowie die Menge desselben abgestimmt sind.

Wie dies insbesondere aus der vergrößerten Darstellung gemäß Fig. 3 ersichtlich ist, gelangt das in den Vertiefungen 8 der Verteileinrichtungen bzw. Säräder 7 aufgenommene Material durch eine Drehbewegung der Verteileinrichtung im Sinn des Pfeils 9 jeweils in ein im Wesentlichen vertikal angeordnetes Zwischenelement 10, welches für eine vereinfachte Aufnahme des auszubringenden Materials, welches schematisch mit 11 angedeutet ist, an seinem zu der Verteileinrichtung 7 gewandten Ende 12 trichterförmig erweitert ist.

Nach einem Durchtritt durch den durch das Zwischenelement 10 definierten im Wesentlichen vertikalen Kanal bzw. Hohlraum 13, in welchem eine Beschleunigung des auszubringenden Materials 11 durch den Einfluss der Schwerkraft erfolgt, gelangt das auszubringende Material 11 in jeweils eine an das Zwischenelement 10 anschließende Ausbringeinrichtung 14, wobei eine Anschluss- bzw. Festlegungsmuffe der beispielsweise der von einem Schlauch gebildeten Ausbringeinrichtung 14 mit 15 angedeutet ist.

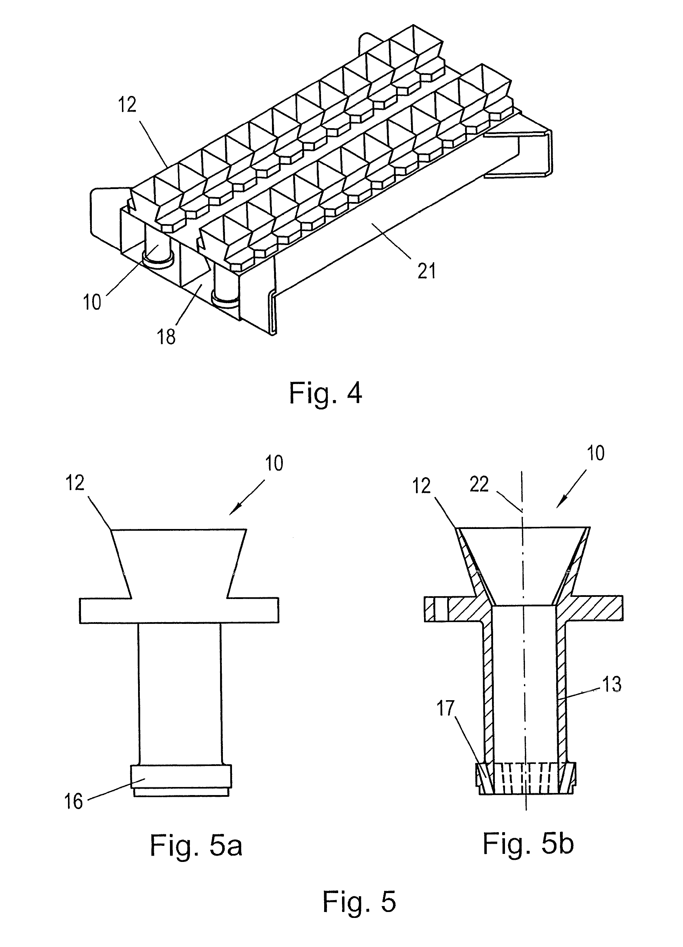

Wie dies insbesondere aus Fig. 5 deutlicher ersichtlich werden wird, erfolgt im Bereich des von dem Ende 12 abgewandten Endes 16 des Zwischenelements 10 über wenigstens eine am Umfang angeordnete Durchtrittsöffnung 17 eine Einbringung von Druckluft aus dem die Zwischenelemente 10 jeweils umgebenden Druckluftkanal 18 in das Innere desselben.

Um einen unkontrollierten Durchtritt von auszubringendem Material 11 aus den Verteileinrichtungen bzw. Särädern 7 vorgeschalteten Vorratsbehälter zu verhindern, sind darüber hinaus mit dem Umfang der walzenförmigen Verteileinrichtung 7 zusammenwirkende Dichtelemente in Fig. 3 mit 19 und 20 angedeutet.

Weitere Konstruktionselemente, welche nicht für das Verständnis der Erfindung erforderlich sind, sind hierbei nicht im Detail beschrieben, da sie im Wesentlichen die Funktion eines Rahmens bzw. einer Halterung oder eines Gehäuses übernehmen.

Aus Fig. 4 ist ersichtlich, dass eine Mehrzahl von wiederum mit 10 bezeichneten Zwischenelementen in einem gemeinsamen Träger bzw. Abstützelement 21 aufgenommen ist. In Fig. 4 ist darüber gezeigt, dass das Träger- bzw. Abstützelement 21 gleichzeitig die jeweils einer Mehrzahl von Zwischenelementen 10 zugeordneten Druckluftkanäle 18 definiert.

Bei der Ausbildung gemäß Fig. 4 ist vorgesehen, dass nicht nur eine Mehrzahl von 12 Zwischenelementen 10 in einer Reihe und im Wesentlichen parallel zu der nicht dargestellten und zugeordneten walzen- bzw. rollenförmigen Verteileinrichtung angeordnet ist, sondern dass ähnlich wie bei der Darstellung gemäß Fig. 3 zwei derartige parallele Reihen von Zwischenelementen 10 vorgesehen sind.

Unter Berücksichtigung der Darstellung gemäß Fig. 2, woraus ersichtlich ist, dass insgesamt vier Verteileinrichtungen 7 jeweils mit einer Mehrzahl von Zwischenelementen 10 zusammenwirken, ist somit erkennbar, dass bei dieser dargestellten Ausführungsform einer Vorrichtung zum Ausbringen eines körnigen oder riesel- bzw. streufähigen Materials beispielsweise 48 Ausbringeinrichtungen vorgesehen bzw. angeschlossen werden können.

In Fig. 5 ist ein Zwischenelement 10 im Detail und in vergrößertem Maßstab dargestellt, wobei ersichtlich ist, dass an dem vom trichterförmigen Eintrittsende 12 abgewandten Ende 16 desselben jeweils eine Mehrzahl von Öffnungen 17 vorgesehen ist, über welche aus dem umgebenden Druckluftkanal 18 Druckluft in das Innere 13 des Zwischenelements 10 bzw. in die unmittelbar daran anschließende Ausbringeinrichtung 14 eingebracht wird. Durch die Orientierung der Öffnungen 17 nahezu parallel zur Längsachse 22 des durch das Zwischenelement 10 definierten Kanals 13 und unter Berücksichtigung der durch die Schwerkraft erzielten Beschleunigung des auszubringenden Materials ebenfalls in Richtung der Längsachse 22 des Durchtrittskanals 13 des Zwischenelements 10 erfolgt somit eine weitere Beschleunigung des auszubringenden Materials, wodurch dieses auch durch Ausbringeinrichtungen 14 zuverlässig ausgebracht werden kann, welche gegebenenfalls eine vergleichsweise große Länge aufweisen.

Durch die Orientierung der Zufuhröffnungen 17 in Richtung eines Ausbringens des Materials kann darüber hinaus zuverlässig verhindert werden, dass Druckluft in den Bereich der vorgeschalteten Verteileinrichtung gelangt bzw. rückschlägt, so dass im Bereich dieser Verteileinrichtung keine übermäßigen Vorkehrungen im Hinblick auf eine Abdichtung derselben insbesondere gegenüber dem vorgeschalteten Vorratsbehälter erforderlich sind.

Durch eine gleichmäßige Verteilung der Öffnungen 17 für die Zufuhr von Druckluft in das Innere 13 des Zwischenelements 10 sowie die daran anschließende Ausbringeinrichtung kann somit auch über einen vergleichsweise geringen lichten Querschnitt aufweisende Öffnungen 17 eine ausreichende Menge an Druckluft eingebracht werden.

Anstelle der insbesondere in Fig. 4 vorgesehenen Anzahl von Zwischenelementen 10, welche jeweils in einer Reihe angeordnet sind, sowie einem Vorsehen von zwei Reihen derartiger Zwischenelemente 10 kann insbesondere entsprechend der zu bearbeitenden Fläche und/oder des auszubringenden Materials eine entsprechend unterschiedliche Anzahl von Zwischenelementen und somit daran anschließenden Ausbringeinrichtungen 14 in einer Reihe als auch eine entsprechende Anzahl von Verteileinrichtungen 7 sowie Reihen von Zwischenelementen 10 vorgesehen sein.

Für eine einfache Anpassung an derartige unterschiedliche Gegebenheiten kann somit das Träger- bzw. Abstützelement 21 insbesondere auswechselbar in der Vorrichtung 1 festlegbar bzw. anordenbar sein. Durch Integration der Druckluftkanäle 18 zur Zufuhr von Druckluft zu den einzelnen Zwischenelementen 10 in das Träger- bzw. Abstützelement 21 erfolgt derart auch unmittelbar eine Anpassung der Erfordernisse für die zuzuführende Druckluft.

Darüber hinaus kann das Zwischenelement 10 einstückig bzw. integral mit der Ausbringeinrichtung 14 ausgebildet sein bzw. einen Teil davon darstellen.

## Patentansprüche

1. Verfahren zum Ausbringen eines körnigen oder riesel- bzw. streufähigen Materials (11), beispielsweise Saatgut, Düngemittel oder dgl., wobei das auszubringende Material (11) aus einem Vorratsbehälter (2) zu wenigstens einer Verteileinrichtung (7) geliefert wird und von dieser über eine Mehrzahl von Ausbringeinrichtungen (14) unter Beaufschlagung des auszubringenden Materials (11) mit Druckluft ausgebracht wird, **dadurch gekennzeichnet, dass** das auszubringende Material (11) von der Verteileinrichtung (7) in eine Mehrzahl von im Wesentlichen vertikal angeordneten Zwischenelementen (10) eingebracht wird, in welche an dem jeweils von der Verteileinrichtung (7) abgewandten Ende (16) Druckluft für ein Ausbringen des Materials (11) über an die Zwischenelemente (10) anschließende Ausbringeinrichtungen (14) eingebracht wird.

2. Verfahren nach Anspruch 1, **dadurch gekennzeichnet, dass** die Druckluft über einen Druckluftkanal (18) gleichzeitig zu einer Mehrzahl von Zwischenelementen (10) zugeführt wird.

3. Verfahren nach Anspruch 1 oder 2, **dadurch gekennzeichnet, dass** die Druckluft in die Zwischenelemente (10) in Richtung zu den an die Zwischenelemente (10) anschließenden Ausbringeinrichtungen (14) eingebracht wird.

4. Verfahren nach Anspruch 1, 2 oder 3, **dadurch gekennzeichnet, dass** das auszubringende Material (11) über eine insbesondere walzenförmige und mit Vertiefungen (8) zur Aufnahme einer vorbestimmten Menge des auszubringenden Materials (11) sowie zu einer Rotationsbewegung antreibbaren Verteileinrichtung (7) zu den Zwischenelementen (10) eingebracht wird.

5. Verfahren nach einem der Ansprüche 1 bis 4, **dadurch gekennzeichnet, dass** die Druckluft aus einer Druckluftquelle zu einer Mehrzahl von jeweils mit einer Mehrzahl von Zwischenelementen (10) zusammenwirkenden Druckluftkanälen (18) zugeführt wird.

6. Vorrichtung zum Ausbringen eines körnigen oder riesel- bzw. streufähigen Materials (11), beispielsweise Saatgut, Düngemittel oder dgl., mit einem Vorratsbehälter (2) für das auszubringende Material, wenigstens einer Verteileinrichtung (7), einer Mehrzahl von Ausbringeinrichtungen (14) sowie einer Druckluftquelle zur Beaufschlagung des auszubringenden Materials mit Druckluft, **dadurch gekennzeichnet, dass** an die wenigstens eine Verteileinrichtung (7) für ein Ausbringen des auszubringenden Materials (11) eine Mehrzahl von im Wesentlichen vertikal angeordneten Zwischenelementen (10) anschließt, welche jeweils an ihrem von der Verteileinrichtung (7) abgewandten Ende (16) mit wenigstens einer Öffnung (17) zur Einbringung von Druckluft versehen sind, und dass an dem von der Verteileinrichtung (7) abgewandten Ende jedes Zwischenelements (10) jeweils eine insbesondere schlauchförmige und an sich bekannte Ausbringeinrichtung (14) anschließt.

7. Vorrichtung nach Anspruch 6, **dadurch gekennzeichnet, dass** eine Mehrzahl von Zwischenelementen (10) in einem gemeinsamen Druckluftkanal (18) angeordnet ist, über welchen Druckluft von der Druckluftquelle zu den Zwischenelementen (10) zuführbar ist.

8. Vorrichtung nach Anspruch 6 oder 7, **dadurch gekennzeichnet, dass** die Zwischenelemente (10) an ihrem von der Verteileinrichtung (7) abgewandten Ende (16) über den Umfang verteilt mit einer Mehrzahl von Öffnungen (17) für die Einbringung von Druckluft ausgebildet sind.

9. Vorrichtung nach Anspruch 6, 7 oder 8, **dadurch gekennzeichnet, dass** die wenigstens eine Öffnung (17) für Druckluft in Richtung zu der an das Zwischenelement (10) anschließenden Ausbringeinrichtung (14) orientiert ist.

10. Vorrichtung nach einem der Ansprüche 6 bis 9, **dadurch gekennzeichnet, dass** die Verteileinrichtung (7) von einer insbesondere walzenförmigen und mit Vertiefungen (8) zur Aufnahme einer vorbestimmten Menge des auszubringenden Materials (11) sowie antreibbare Verteileinrichtung (7) gebildet ist, welche mit einer Mehrzahl von in einer Reihe angeordneten Zwischenelementen (10) zusammenwirkt.

11. Vorrichtung nach einem der Ansprüche 6 bis 10, **dadurch gekennzeichnet, dass** eine Mehrzahl von Verteileinrichtungen (7) jeweils mit einer Mehrzahl von Zwischenelementen (10) zusammenwirkt .

12. Vorrichtung nach Anspruch 11, **dadurch gekennzeichnet, dass** die Verteileinrichtungen (7) im Wesentlichen parallel zueinander angeordnet sind.

13. Vorrichtung nach Anspruch 11 oder 12, **dadurch gekennzeichnet, dass** entsprechend der Mehrzahl von Verteileinrichtungen (7) und diesen zugeordneten Zwischenelementen (10) eine Mehrzahl von Druckluftkanälen (18) vorgesehen ist.

14. Vorrichtung nach einem der Ansprüche 6 bis 13, **dadurch gekennzeichnet, dass** im Bereich der Verteileinrichtung (7) wenigstens eine Abdichteinrichtung (19, 20) vorgesehen ist.

15. Vorrichtung nach einem der Ansprüche 6 bis 14, **dadurch gekennzeichnet, dass** die wenigstens eine Verteileinrichtung (7) entfernbar und austauschbar in der Vorrichtung (7) festlegbar ist.

16. Vorrichtung nach einem der Ansprüche 6 bis 15, **dadurch gekennzeichnet, dass** die Mehrzahl von mit einer Verteileinrichtung (7) zusammenwirkenden Zwischenelementen (10) in einem gemeinsamen Träger- bzw. Abstützelement (21) aufgenommen ist, welches insbesondere entfernbar und austauschbar in der Vorrichtung (1) festlegbar ist.
